# EUROPÄISCHE PATENTSCHRIFT

(11) **EP 0 392 220 B1**
(45) Veröffentlichungstag und Bekanntmachung des Hinweises auf die Patenterteilung: **18.08.1993**
(21) Anmeldenummer: 90105209.2
(22) Anmeldetag: 20.03.1990
(51) Int. Cl.: F16C 29/06

(54) **Kugelumlaufbüchse für eine Linearkugelführung**
Ball-recirculating sleeve for a linear ball guide
Douille à recirculation de billes pour un guidage linéaire des billes

(30) Priorität: 08.04.1989 DE 3911500
(43) Veröffentlichungstag der Anmeldung: 17.10.1990
(73) Patentinhaber: Jacob, Werner, D-60598 Frankfurt (DE)
(72) Erfinder: Jacob, Werner, D-60598 Frankfurt (DE)
(74) Vertreter: Harwardt, Günther, Dipl.-Ing.

(56) Entgegenhaltungen:
- GB-A- 1 511 205
- US-A- 2 451 359

## Beschreibung

Die Erfindung betrifft eine Kugelumlaufeinheit mit einem einen Längsschlitz aufweisenden Büchsenkörper und einem Käfig zur Übergreifung einer im Querschnitt zumindest teilweise kreisförmigen Führungsschiene, und mit mehreren über den Querschnitt verteilt angeordneten endlosen Kugelreihen, die in dem Käfig und dem Büchsenkörper geführt sind, wobei die Kugelreihen jeweils einen Tragabschnitt, der parallel zur Längsachse des Büchsenkörpers und der Führungsschiene verläuft, in welchem die Kugeln aus dem Käfig zwecks Anlage auf der Führungsschiene herausragen, einem Rückführabschnitt und diese beiden Abschnitte an ihren Enden verbindende Umlenkabschnitte aufweisen und wobei die Kugeln im Tragabschnitt an Laufbahnen des Büchsenkörpers abgestützt sind, wobei die Rückführabschnitte auf einem größeren Durchmesser angeordnet sind als die Tragabschnitte und der Käfig mehrteilig ausgebildet ist und zwei gleiche, in den Büchsenkörper von dessen beiden Enden her eingesteckte Führungsteile aufweist, die die Kugeln im Tragabschnitt seitlich führen, und die radial nach innen und außen offene Längsschlitze und die jeweils einen Flansch mit einem ersten Abschnitt der Umlenkabschnitte für die Überführung der Kugeln in den Rückführabschnitt aufweisen und der Mittel zur Zentrierung der beide Führungsteile zueinander und Mittel zur Zentrierung gegenüber dem Büchsenkörper aufweist.

Eine derartige Kugelumlaufeinheit ist aus der GB-A-1 511 205 bekannt. Die äußeren Tragbahnen, an denen sich die Kugeln im Tragabschnitt abstützen, sind durch einzelne Laufbahnsegmente gebildet. Die Kugeln einer Kugelreihe sind dabei so angeordnet, daß die in den beiden Abschnitten, nämlich Tragabschnitt und Rückführabschnitt, befindlichen Kugeln in einer Ebene liegen, die radial, bezogen auf die Längsachse der Führungsschiene, und durch die Kugelmittelpunkte der sich im Tragabschnitt befindlichen Kugeln verläuft. Die einzelnen Laufbahnsegmente sind entweder in einem Träger aufgenommen oder nur über die den Käfig bildenden Teile verbunden.

Die Aufnahmebohrung für die bekannte Kugelumlaufführung ist im zu lagernden Bauteil sehr genau auszuführen, um die gewünschten Spielverhältnisse zu erreichen. Darüberhinaus muß die Bohrung so ausgeführt sein, daß auch möglichst alle Kugelführungsreihen an der Übertragung der Auflast beteiligt sind. Die geteilte Ausbildung hat zur Folge, daß die Aufnahmebüchse selbst keine Kräfte oder solche nur im unwesentlichen Maße übernehmen kann. Darüberhinaus baut die Einheit im Verhältnis zu den übertragbaren Lasten durch die Anordnung der Tragabschnitte und der Rückführabschnitte relativ groß.

Der Erfindung liegt die Aufgabe zugrunde, eine Kugelumlaufeinheit vorzuschlagen, die einbaufertig ist und bei der die Ausführung der Aufnahme praktisch keinen Einfluß auf die Qualität der Führung hat und bei der darüberhinaus eine möglichst hohe Tragfähigkeit und eine vereinfachte Bauweise hinsichtlich der Anordnung und Montage der einzelnen Bauteile erreicht wird.

Diese Aufgabe wird erfindungsgemäß dadurch gelöst, daß der Büchsenkörper als Massivkörper ausgebildet ist, dessen Innenfläche als Laufbahn für die in den Tragabschnitten befindlichen Kugeln dient, daß die Tragabschnitte und die Rückführabschnitte in zueinander umfangsmäßig versetzten, sich radial erstreckenden Ebenen angeordnet sind, und die Rückführabschnitte durch Borungen in dem Büchsenkörper gebildet sind, daß die Kugelreihen so verteilt angeordnet sind, daß die Rückführabschnitte der an den Längsschlitz beidseitig angrenzenden Kugelreihen den Schlitzbegrenzungsflächen unmittelbar benachbart sind, daß der Käfig aus den beiden Führungsteilen und daran kopfseitig angebrachten Kopfstücken besteht, die den zweiten Abschnitt der Umlenkabschnitte aufweisen, und daß Mittel zur Zentrierung der Kopfstücke gegenüber den Führungsteilen vorgesehen sind.

Von Vorteil bei dieser Ausbildung ist, daß der zur Verfügung stehende Kreisringbogen, mit dem die Kugelumlauf die Führungsschiene umspannt, optimal zur Anbringung der Kugelreihen ausgenutzt wird. Durch die umfangsmäßige Versetzung der Tragbahnabschnitte und der Rückführabschnitte wird erreicht, daß für die im Tragabschnitt befindlichen Kugeln eine optimale Stützung durch den Büchsenkörper erfolgt, da in diesen Bereichen der gesamte Querschnitt des Büchsenkörpers für die Aufnahme der Auflast zur Verfügung steht. Durch die Anordnung in zueinander versetzten sich radial erstreckenden Ebenen wird außerdem eine kompakte Bauweise erzielt, wobei zusätzlich jedoch eine einwandfreie Umlenkung ohne Stoßen oder Verklemmen der Kugeln bei Überführung aus dem Tragabschnitt in den Rückführabschnitt und umgekehrt erzielt wird. Da die Rückführabschnitte der an den Längsschlitz des Büchsenkörpers angrenzenden Kugelreihen den Begrenzungsflächen unmittelbar benachbart und die Rückführabschnitte auf einem größeren Durchmesser angeordnet sind als die Tragabschnitte, können bei gleichem benötigten Bauraum im Verhältnis zu den aus dem Stand der Technik bekannten Lösungen eine größere Anzahl von Kugelumlaufreihen untergebracht werden. Darüberhinaus folgt aus dieser Anordnung, daß in dem Bereich der Hauptlast, das ist in der Regel die Ebene, die die Schlitzmitte und die Längsachse enthält, eine enge Aneinanderreihung von tragenden Kugelreihen erzielt wird. Ferner wird durch die Anordnung der einzelnen Abschnitte in versezten sich radial erstreckenden Ebenen die Möglichkeit gegeben, größere Kugeln, die auch eine höhere Tragkapazität haben, einzusetzen. Ferner wird eine einfache Bauweise erreicht, weil praktisch wenige identische Teile für den Käfig genutzt werden können, um diesen daraus zusammenzusetzen. Die Lage der Teilfugen erlaubt darüberhinaus eine Herstellung ohne Hinterschnitte, so daß auch für die Herstellung der aus Kunststoff bestehenden Teile im Wege des Spritzgießens einfache Werkzeuge, die enge Toleranzen erlauben, einsetzbar sind.

In weiterer Ausgestaltung der Erfindung ist vorgesehen, daß die Kugelreihen bezüglich einer die Längsachse des Büchsenkörpers und die Mittelebene des Längsschlitzes enthaltenden Ebene symmetrisch ausgebildet sind.

Nach einem weiteren Merkmal der Erfindung wird vorgeschlagen, daß der Büchsenkörper, im Längsschnitt gesehen, seitlich der die Tragbahn bildenden Innenfläche mit Bohrungsstufen größeren Durchmessers als die die Innenflächen darstellende Bohrung versehen ist, in welchen jeweils die Führungsteile und die Kopfstücke eingesetzt und gesichert sind. Durch diese Maßnahme wird die Montage und die Zentrierung der Bauteile einandergegenüber erleichtert.

Für die lagegerechte Montage und Zentrierung ist ferner in Ergänzung der Erfindung vorgesehen, daß die Führungsteile jeweils einen axial von ihrem Flansch in Richtung der Ringfläche der Bohrungsstufe vorstehenden Zentriernocken aufweisen, die in entsprechende Zentrierausnehmungen, die von den Ringflächen ausgehen, eingreifen. Durch diese Ausbildung wird eine Umfangsausrichtung mit einer genauen Zentrierung der einzelnen Kanäle zueinander erreicht.

Zur Zentrierung der Führungsteile und der Kopfstücke ist vorgesehen, daß die Führungsteile mit einer ringförmigen Zentrierwulst und die Kopfstücke mit einer entsprechenden ringförmigen Zentriernut versehen sind.

Zur Erhöhung der Tragfähigkeit und der Stabilität sowie Ausrichtung der einzelnen Bauteile des Käfigs einander gegenüber ist nach einem weiteren Merkmal der Erfindung vorgeschlagen, daß die Führungsteile und die Kopfstücke mit sich parallel zur Längsachse erstreckenden, umfangsverteilten Bohrungen versehen sind, in die Stabilisierstäbe einsteckbar sind. Durch die Stabilisierstäbe werden die Führungsteile einandergegenüber ausgerichtet gehalten. Darüberhinaus erfährt der Käfig eine erhebliche Festigkeitssteigerung durch die Stabilisierstäbe.

Bevorzugt sind die Bohrungen in den Stegen zwischen zwei Tragabschnitten der Führungsteile angeordnet.

Die Zentrierausnehmung für den Zentriernocken ist bevorzugt auf der Symmetrieebene angeordnet, so daß der Freiraum der sich in diesem Bereich ergibt, da sich die Rückführabschnitte der beiden benachbarten Kugelreihen auf einem größtmöglichen Umfangsabstand zueinander befinden, sinnvoll genutzt wird.

Zur Fixierung der Baueinheit des aus den Einzelteilen gebildeten Käfigs in dem Büchsenkörper ist vorgesehen, daß stirnseitig an den Kopfstücken anliegend Halteringe in die Bohrungsstufen eingesetzt sind, die durch Umbördeln der Wandung des Büchsenkörpers radial nach innen festgelegt sind. Durch diese Maßnahme wird eine Steigerung der Steifigkeit der Baueinheit erzielt. Bevorzugt sind die Halteringe zusätzlich noch mit einer Ausnehmung für die Aufnahme eines Dichtungsringes versehen.

Nach einem weiteren Vorschlag bestehen die Führungsteile und die Kopfstücke aus Kunststoff.

Demgegenüber sind die Stabilisierstäbe aus Stahl hergestellt. Zur einfachen Befestigung der Kugelumlaufeinheit kann ferner vorgesehen sein, daß der Büchsenkörper mit einem Montageflansch versehen ist. Dieser dient zur Befestigung an einem auf der Führungsschiene zu lagernden Bauteil.

Bevorzugte Ausführungsbeispiele der Erfindung sind in der Zeichnung schematisch dargestellt.

Es zeigt
- Figur 1: einen Querschnitt C-C, durch die auf einer Führungsschiene gelagerte Kugelumlaufeinheit,
- Figur 2: zwei Längsschnitte, und zwar
- Figur 2a: (linke Hälfte von Figur 2), einen Schnitt A-A gemäß Figur 1 und
- Figur 2b: (rechte Hälfte von Figur 2), einen Schnitt B-B gemäß Figur 1,
- Figur 3: eine Ansicht auf eine Stirnfläche eines Führungsteils,
- Figur 4a: (linke Hälfte von Figur 4), einen Schnitt D-D gemäß Figur 3 und
- Figur 4b: (rechte Hälfte von Figur 4), einen Schnitt E-E gemäß Figur 3,
- Figur 5: eine Ansicht entsprechend Pfeilrichtung J von Figur 6 auf eine Stirnfläche und zwar die die Umlenkbahn enthaltende Stirnfläche eines Kopfstückes,
- Figur 6a: (linke Hälfte von Figur 6) einen Schnitt G-G gemäß Figur 5 und
- Figur 6b: (rechte Hälfte von Figur 6) einen Schnitt H-H gemäß Figur 5.
- Figur 7: eine Ansicht auf eine aus Segmenten aufgebauten Kugelumlaufeinheit in Pfeilrichtung N gemäß Figur 8,
- Figur 8a: (linke obere Hälfte von Figur 8), einen Schnitt L-L gemäß Figur 7,
- Figur 8b: (linke untere Hälfte von Figur 8), einen Schnitt K-K gemäß Figur 7 und
- Figur 8c: (rechte Hälfte von Figur 8), einen Schnitt M-M gemäß Figur 7.

Die Kugelumlaufeinheit 1 dient zur Lagerung eines Tisches 5 oder Maschinenteils auf einer Führungsschiene 2. Die Führungsschiene 2 ist im Querschnitt als Kreisprofil ausgebildet und mit einem Befestigungselement 4 versehen, über welches die Führungsschiene 2 an einer Unterlage befestigt werden kann. Die Führungsschiene 2 kann Bestandteil des Befestigungselementes 4 sein oder aber mit diesem über geeignete Schraubverbindungen verbunden sein. Die Kugelumlaufeinheit 1 ist im Querschnitt geschlitzt ausgeführt. Der Längsschlitz ist mit 6 bezeichnet. Die Kugelumlaufeinheit 1 weist im Querschnitt umfangsverteilt angeordnete Kugelreihen 7 auf. Jede Kugelreihe 7 besteht aus einem Tragabschnitt 13, einem Rückführabschnitt 14 und die beiden endseitig miteinander verbindende Umlenkabschnitte 15. Im Bereich des Tragabschnittes 13 treten die in einem Käfig 11 geführten Kugeln 12 aus diesem heraus und stützen sich an der Außenfläche 3 der Führungsschiene 2 ab.

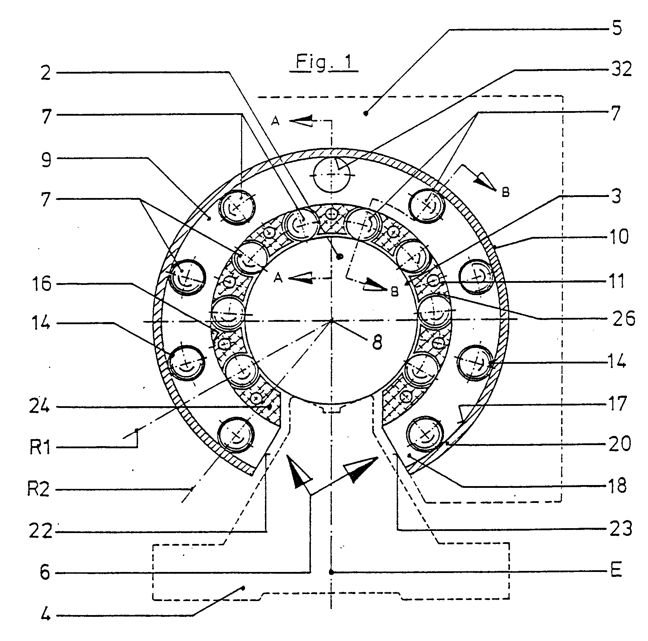

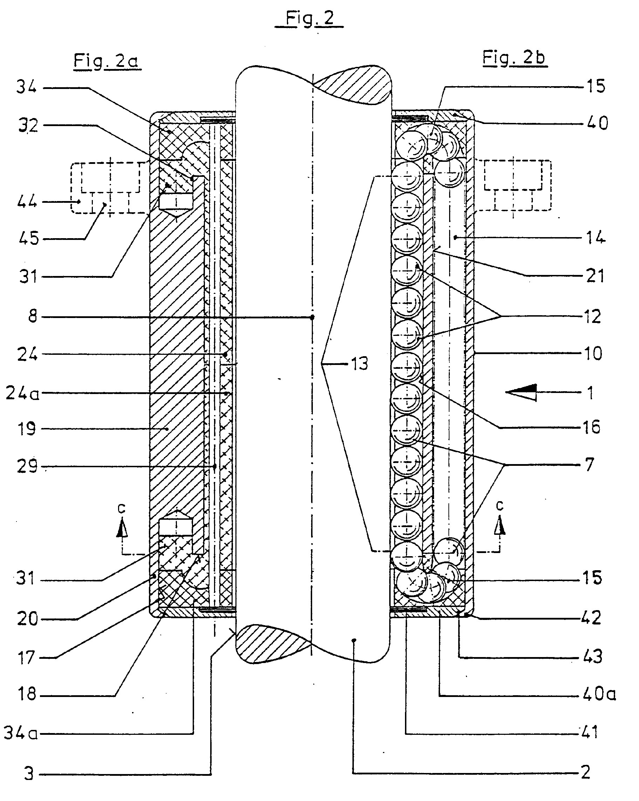

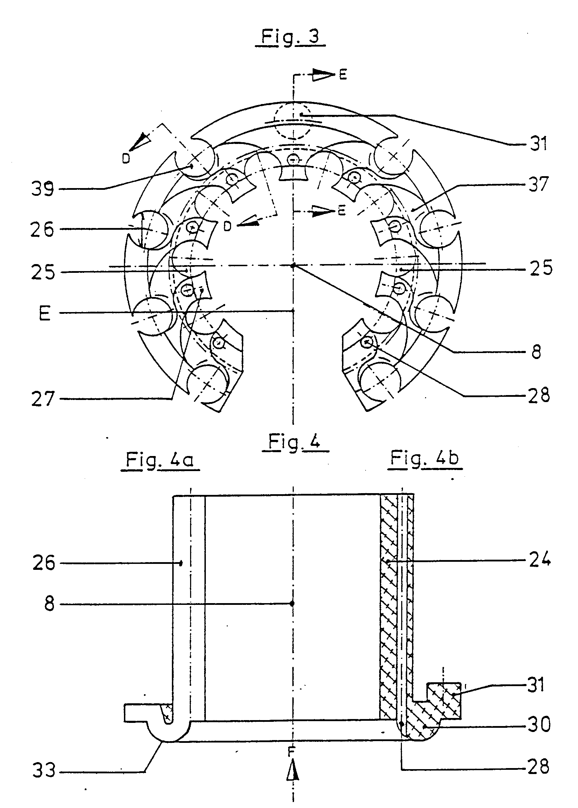

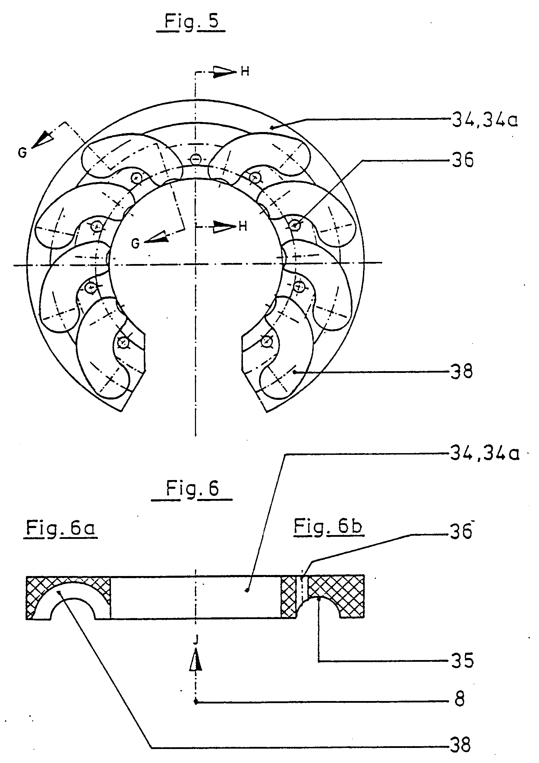

Im Tragabschnitt 13 und Rückführabschnitt 14 sind die Kugeln 12 so geführt, daß sie mit ihren Mittelpunkten auf einer Achse angeordnet sind, welche parallel zur Längsachse 8 der Führungsschiene 2 in dem Büchsenkörper 9 verläuft. Tragabschnitt 13 und Rückführabschnitt 14 einer Kugelreihe 7 sind, wie aus Figur 1 ersichtlich, umfangsversetzt zueinander in sich radial erstreckenden Ebenen R1 und R2 angeordnet. Ferner ist der Rückführabschnitt 14 auf einem größeren Durchmesser bezüglich der Längsachse 8 angeordnet, als die Kugeln, die sich im Tragabschnitt 13 befinden. Die ersten, dem Schlitz 6 benachbarten Kugelreihen 7 sind so angeordnet, daß sich die Rückführabschnitte 14 in unmittelbarer Nachbarschaft zu den Begrenzungsflächen 22, 23 des Längsschlitzes 6 befinden. Die Rückführabschnitte 14 werden durch Bohrungen 21 in dem Büchsenkörper 9 gebildet. Der Büchsenkörper 9 ist in seinem mittleren Bereich dickwandig ausgestaltet. Der dickwandige Bereich ist mit 19 bezeichnet. Endseitig schließen sich an den dickwandigen Bereich 19 zwei dünnwandige Abschnitte 20 an, welche durch eine Bohrungsstufe 17 gebildet werden. Die durch die Bohrungsstufe entstehende Ringfläche ist mit 18 bezeichnet. Im Tragabschnitt 13 stützen sich die Kugeln 12 einerseits auf der Außenfläche 3 der Führungsschiene 2 und andererseits in der Innenfläche 16, welche durch die Bohrung des Büchsenkörpers 9 gebildet wird, ab. Von den beiden Stirnseiten des Büchsenkörpers 9 her sind in die Bohrung 16 die den Käfig 11 bildenden Elemente eingesetzt. Der Käfig 11 ist mehrteilig ausgebildet und besteht aus zwei Führungsteilen 24, 24a, die identisch und anhand der Figuren 2 bis 4 noch näher erläutert sind. Ferner umfaßt der Käfig 11 zwei endseitig angebrachte Kopfstücke 34, 34a, deren Anordnung sich aus Figur 2 und deren Ausbildung sich aus den Figuren 5 und 6 im einzelnen ergibt.

Nachfolgend werden zunächst die Führungsteile 24, 24a und deren Anordnung in dem Büchsenkörper 9 beschrieben. Die beiden gleich ausgebildeten Führungsteile 24, 24a sind hülsenartig gestaltet, wobei endseitig an einem Ende ein flanschartiger Ansatz 30 vorgesehen ist. Die Führungsteile 24, 24a besitzen sich in Längsrichtung, das heißt parallel zur Achse 8, erstreckende Längsschlitze 25, die radial nach außen und innen offen sind und das Hindurchragen der Kugeln 12 erlauben. Die zwischen zwei Schlitzen 25 befindlichen Stege 27 weisen gegenüber den Kugeln 12 kreisbogenartige Führungsflächen 26 auf, die die Kugeln 12 seitlich führen. Die Stege 27 erlauben, daß sich die Kugeln 12 an der Innenfläche 16 des Büchsenkörpers 9 und an der Außenfläche 3 der zugehörigen Führungsschiene 2 abstützen können. Der Flansch 30 der Führungsteile 24, 24a besitzt auf seiner der Ringfläche 18 der Bohrungsstufe 17 zugewandten Stirnfläche einen axial vorstehenden Zentriernocken 31, der in der Symmetrieebene E angeordnet ist. Der Zentriernocken 31 greift in eine Zentrierausnehmung 32 in der Ringfläche 18 des dickwandigen Bereiches 19 des Büchsenkörpers 9 ein. Auf der nach außen gerichteten Stirnfläche des Flansches 30 ist eine ringförmige Zentrierwulst 33 zur Zentrierung des Kopfstückes 34, 34a vorgesehen. Ferner sind in dieser Stirnfläche, die einen ersten Abschnitt des Umlenkabschnittes 15 bildet, Umlenkbahnen 37 eingeformt, welche zusammen mit den sie ergänzenden Kugelumlenkbahnen 38 in den beiden Kopfstücken 34, 34a einen geschlossenen Kanal für die Umlenkung und Führung der Kugeln 12 aus dem Tragabschnitt 13 in den Rücklaufabschnitt 14, der durch die Bohrung 21 in dem Büchsenkörper 9 gebildet wird, darstellen.

Die Kopfstücke 34, 34a sind mit entsprechend der Zentrierwulst 33 ausgebildeten Zentriernuten 35 versehen, welche für eine radiale Ausrichtung der Kopfstücke 34, 34a gegenüber den Führungsteilen 24, 24a sorgen. Die Zentriernocken 31 der beiden Führungsteile 24, 24a sorgen für eine umfangsmäßige Ausrichtung der in dem Flansch 30 vorgesehenen Rückführöffnungen 39 gegenüber den Rückführbohrungen 21 des Büchsenkörpers 9.

Zur Stabilisierung und Zentrierung der Kopfstücke 34, 34a den Führungsteilen 24, 24a gegenüber sowie der Führungsteile 24, 24a einander gegenüber, sind Stabilisierstäbe 29 vorgesehen. Die Stabilisierstäbe 29 werden in Bohrungen 28 der Führungsteile 24, 24a und entsprechend angeordnete Bohrungen 36 der Kopfstücke 34, 34a eingesetzt. Die Bohrungen 28 der Führungsteile 24, 24a befinden sich im Bereich der Stege 27. Bevorzugt sind die Stabilisierstäbe 29 aus Stahl hergestellt und unterstützen den Käfig 11. Die beiden Führungsteile 24, 24a und die Kopfstücke 34, 34a sind jeweils in die Bohrungsstufe 17 eingeschoben und durch an den Stirnflächen der Kopfstücke 34, 34a axial anschließende Halteringe 40, 40a, welche durch Verformung des dünnwandigen Bereiches 20 des Büchsenkörpers 9 festgelegt sind, axial zusammengehalten. Der Haltering 40,40a ist zur Erleichterung der Umbördelung des dünnwandigen Abschnittes 20 mit einer Schrägfläche 43 versehen. Der Bördelrand ist mit 42 bezeichnet. Die beiden Halteringe 40, 40a besitzen Ausnehmungen 41, in welche Dichtungen eingesetzt sind, die zur Abdichtung gegenüber der Außenfläche 3 der Führungsschiene 2 dienen. Sie sollen das Eindringen von Schmutz in die Führung, beziehungsweise Abstreifen von Schmutz von der Führung bewirken.

An der Außenfläche 10 des Büchsenkörpers 9 kann ein Befestigungs- oder Montageflansch 44 angebracht sein, der mit Befestigungsbohrungen 45 zur Festlegung der Kugelumlaufeinheit 1 an dem zu führenden Maschinenelement oder Tisch 5 gedacht ist. Es ist jedoch auch möglich, die Kugelumlaufeinheit 1 durch einen Preßsitz direkt in einer Bohrung des Tisches 5 mit der Außenfläche 10 aufzunehmen und darin zu sichern.

Aus Figur 1 ist ferner erkennbar, daß aufgrund der besonderen Anordnung der ersten Kugelreihen 7 gegenüber dem Längsschlitz 7 im Bereich der die Längsachse 8 und die Mittelebene des Schlitzes 6 enthaltenden Ebene ein Freiraum entsteht, der sich zur Anbringung der Zentrierausnehmung 32 anbietet. Ferner ist erkennbar, daß die einzelnen Kugelreihen 7, bezüglich der Ebene E symmetrisch angeordnet sind und insgesamt seitlich der Symmetrieebene jeweils vier Kugelreihen 7 vorgesehen sind. Die Führungsteile 24, 24a und die Kopfstücke 34, 34a sind aufgrund der Lage der Umlenkbahnen 34, 38 und Schlitze 25 als Spritzgußteile ausgebildet und aus Kunststoff hergestellt.

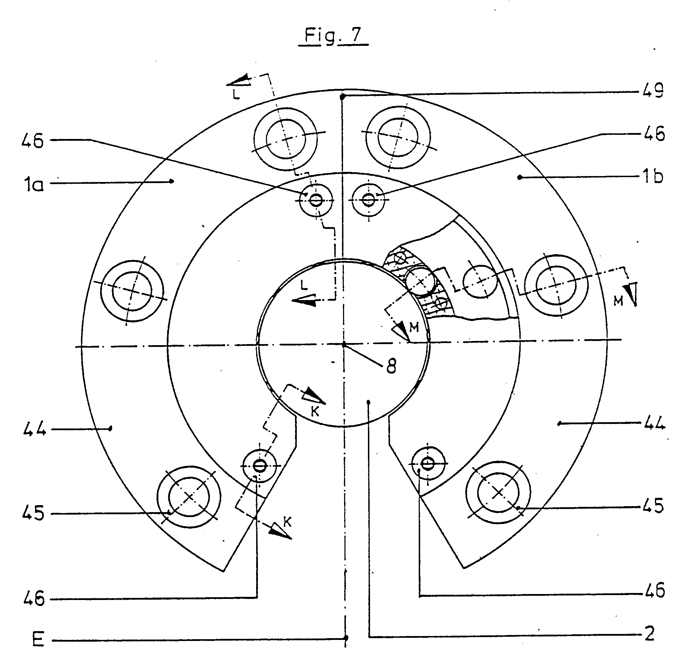

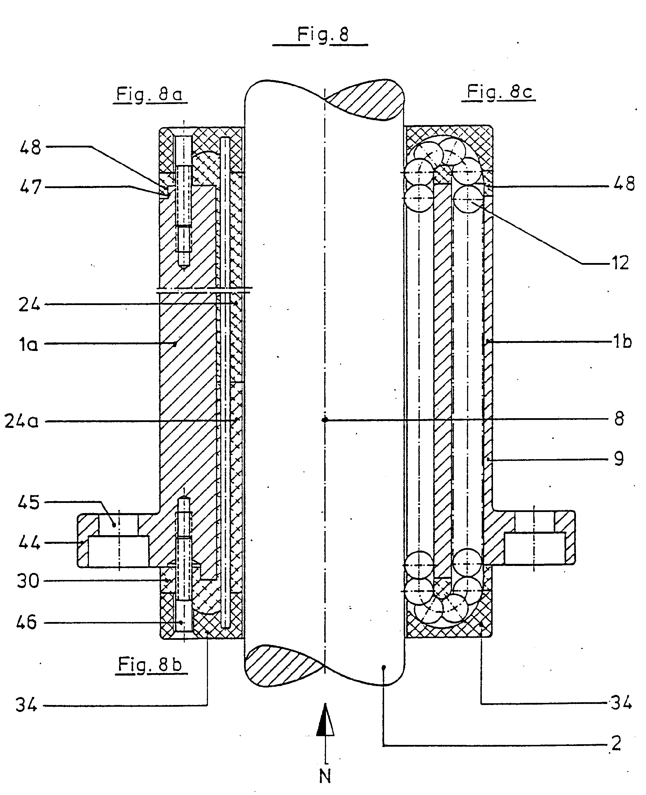

Die symmetrische Ausbildung ermöglicht auch beispielsweise eine Aufteilung der Kugelumlaufeinheit 1 in einzelne Segmente 1a, 1b, wie aus den Figuren 7 und 8 ersichtlich. Dabei ist jedoch auch eine Aufteilung der einzelnen Führungsteile 24, 24a in entsprechende Segmente gefordert. Sie müssen also im Bereich der Trennfuge 49 ebenfalls geteilt sein. Darüberhinaus ist eine andere Fixierung für die Führungsteile 24, 24a den Segmenten des Büchsenkörpers 9 gegenüber erforderlich. Hierzu sind Schrauben 46 vorgesehen, die in die Wandung des Büchsenkörpers 9 eingeschraubt werden und sowohl die Kopfstücke 34, 34a als auch den Flanschbereich der Führungsteile 24, 24a durchgreifen. Da die segmentartige Ausbildung keine genügende Halterung bieten würde, wenn die Enden des Büchsenkörpers als Bohrungsstufe ausgebildet wären, ist eine andere Form der Zentrierung der Führungsteile 24, 24a des Büchsenkörpers 9 gegenüber zu bewerkstelligen. Hierzu ist der Büchsenkörper im Bereich seiner beiden Enden mit Zentrierabsätzen 47 versehen, über die ein Zentrierrand 48 der Führungsteile 24, 24a greift. Ansonsten entspricht die Ausbildung der Führungsteile 24, 24a sowie der Kopfstücke 34, 34a der Ausführungsform gemäß den Figuren 1 bis 6.

### Bezugszeichenliste

- 1, 1a, 1b: Kugelumlaufbüchse/Segmenteinheit
- 2: Führungsschiene
- 3: Außenfläche der Führungsschiene
- 4: Befestigungselement
- 5: Tisch
- 6: Längsschlitz
- 7: Kugelreihen
- 8: Längsachse
- 9: Büchsenkörper
- 10: Außenfläche des Büchsenkörpers
- 11: Käfig
- 12: Kugeln
- 13: Tragabschnitt
- 14: Rückführabschnitt
- 15: Umlenkabschnitt
- 16: Innenfläche des Büchsekörpers/Bohrung
- 17: Bohrungsstufe
- 18: Ringfläche der Bohrungsstufe
- 19: dickwandiger Bereich des Büchsekörpers
- 20: dünnwandiger Bereich des Büchsekörpers im Bereich der Bohrungsstufe
- 21: Rücklaufbohrung für Kugeln
- 22, 23: Begrenzungsflächen des Längsschlitzes
- 24,24a: Führungsteile des Käfigs
- 25: Schlitz im Führungsteil
- 26: Seitenfläche der Schlitze
- 27: Steg
- 28: Bohrung für Stabilisierstäbe
- 29: Stabilisierstäbe
- 30: Flansch
- 31: Zentriernocken
- 32: Zentrierausnehmung für Zentriernocken
- 33: Zentrierwulst
- 34,34a: Kopfstück
- 35: Zentriernut
- 36: Bohrung für Stabilisierstäbe im Kopfstück
- 37: Kugelumlenkbahn im Flansch des Führungsteils
- 38: Kugelumlenkbahn im Kopfstück
- 39: Rücklauföffnung für Kugel im Flansch des Führungsteiles
- 40, 40a: Haltering
- 41: Ausnehmung im Haltering für Dichtung
- 42: Bördelrand
- 43: Schräge am Haltering
- 44: Montageflansch
- 45: Befestigungsbohrung
- 46: Schrauben
- 47: Zentrierabsatz
- 48: Zentrierrand
- 49: Trennfuge
- E: Symmetrieebene
- R1: sich radial erstreckende Ebene für Tragabschnitt
- R2: sich radial erstreckende Ebene für Rückführabschnitt

## Patentansprüche

1. Kugelumlaufeinheit (1,1a,1b) mit einem einen Längsschlitz (6) aufweisenden Büchsenkörper (9) und einem Käfig (11) zur Übergreifung einer im Querschnitt zumindest teilweise kreisförmigen Führungsschiene (2), und mit mehreren über den Querschnitt verteilt angeordneten endlosen Kugelreihen (7), die in dem Käfig (11) und dem Büchsenkörper (9) geführt sind, wobei die Kugelreihen (7) jeweils einen Tragabschnitt (13), der parallel zur Längsachse (8) des Büchsenkörpers (9) und der Führungsschiene (2) verläuft, in welchem die Kugeln (12) aus dem Käfig (11) zwecks Anlage auf der Führungsschiene (2) herausragen, einem Rückführabschnitt (14) und diese beiden Abschnitte an ihren Enden verbindende Umlenkabschnitte (15) aufweisen und wobei die Kugeln (12) im Tragabschnitt (13) an Laufbahnen des Büchsenkörpers (9) abgestützt sind, wobei die Rückführabschnitte (14) auf einem größeren Durchmesser angeordnet sind als die Tragabschnitte (13) und der Käfig (11) mehrteilig ausgebildet ist und zwei gleiche, in den Büchsenkörper (9) von dessen beiden Enden her eingesteckte Führungsteile (24,24a) aufweist, die die Kugeln (12) im Tragabschnitt (13) seitlich führen, und die radial nach innen und außen offene Längsschlitze (25) und die jeweils einen Flansch (30) mit einem ersten Abschnitt der Umlenkabschnitte (15) für die Überführung der Kugeln (12) in den Rückführabschnitt (14) aufweisen, und der Mittel (28,29) zur Zentrierung der beiden Führungsteile (24,24a) zueinander und Mittel (31,32;47,49) zur Zentrierung gegenüber dem Büchsenkörper (9) aufweist,
dadurch gekennzeichnet,
daß der Büchsenkörper (9) als Massivkörper ausgebildet ist, dessen Innenfläche (16) als Laufbahn für die in den Tragabschnitten (13) befindlichen Kugeln (12) dient,
daß die Tragabschnitte (13) und die Rückführabschnitte (14) in zueinander umfangsmäßig versetzten, sich radial erstreckenden Ebenen (R1, R2) angeordnet sind, und die Rückführabschnitte (14) durch Bohrungen (21) in dem Büchsenkörper (9) gebildet sind,
daß die Kugelreihen (7) so verteilt angeordnet sind, daß die Rückführabschnitte (14) der an den Längsschlitz (6) beidseitig angrenzenden Kugelreihen den Schlitzbegrenzungsflächen (22,23) unmittelbar benachbart sind,
daß der Käfig (11) aus den beiden Führungsteilen (24,24a) und daran kopfseitig angebrachten Kopfstücken (3) besteht, die den zweiten Abschnitt (38) der Umlenkabschnitte (15) aufweisen, und daß Mittel (33,35) zur Zentrierung der Kopfstücke (34,34a) gegenüber den Führungsteilen (24,24a) vorgesehen sind.

2. Kugelumlaufeinheit nach Anspruch 1,
dadurch gekennzeichnet,
daß die Kugelreihen (7) bezüglich einer die Längsachse (8) des Büchsenkörpers (9) und die Mittelebene des Längsschlitzes (6) enthaltenden Ebene (E) symmetrisch ausgebildet sind.

3. Kugelumlaufeinheit nach Anspruch 1,
dadurch gekennzeichnet,
daß der Büchsenkörper (9), im Längsschnitt gesehen, seitlich der die Laufbahn bildenden Innenfläche (16) mit
Bohrungsstufen (17) größeren Durchmessers als die die Innenfläche (16) darstellende Bohrung versehen ist, in welchen jeweils die Führungsteile (24, 24a) und die Kopfstücke (34, 34a) eingesetzt und gesichert sind.

4. Kugelumlaufeinheit nach Anspruch 2,
dadurch gekennzeichnet,
daß die Führungsteile (24, 24a) jeweils einen axial von ihrem Flansch (30) in Richtung der Ringfläche (18) der Bohrungsstufe (17) vorstehenden Zentriernocken (31) aufweisen, die in entsprechende Zentrierausnehmungen (32), die von den Ringflächen (18) ausgehen, eingreifen.

5. Kugelumlaufeinheit nach Anspruch 1,
dadurch gekennzeichnet,
daß die Führungsteile (24, 24a) mit einer ringförmigen Zentrierwulst (33) und die Kopfstücke (34, 34a) mit einer entsprechenden ringförmigen Zentriernut (35) versehen sind.

6. Kugelumlaufeinheit nach Anspruch 1,
dadurch gekennzeichnet,
daß die Führungsteile (24, 24a) und die Kopfstücke (34, 34a) mit sich parallel zur Längsachse (8) erstreckenden umfangsverteilten Bohrungen (28, 36) versehen sind, in die Stabilisierstäbe (29) einsteckbar sind.

7. Kugelumlaufeinheit nach Anspruch 6,
dadurch gekennzeichnet,
daß die Bohrungen (28) in den Stegen (27) zwischen zwei Tragabschnitten der Führungsteile (24, 24a) angeordnet sind.

8. Kugelumlaufeinheit nach den Ansprüchen 2 und 4,
dadurch gekennzeichnet,
daß die Zentrierausnehmung (32) auf der Symmetrieebene (E) angeordnet ist.

9. Kugelumlaufeinheit nach Anspruch 3,
dadurch gekennzeichnet,
daß stirnseitig an den Kopfstücken (34, 34a) anliegend Halteringe (40, 40a) in die Bohrungsstufen (17) eingesetzt sind, die durch Umbördeln der Wandung (20) der Büchse (9) radial nach innen festgelegt sind.

10. Kugelumlaufeinheit nach Anspruch 9,
dadurch gekennzeichnet,
daß die Halteringe (40, 40a) mit Ausnehmungen (41) für die Aufnahme eines Dichtringes versehen sind.

11. Kugelumlaufeinheit nach Anspruch 1,
gekennzeichnet
durch die Aufteilung in mehrere sich ergänzende Kreisringsegmente (1a, 1b).

12. Kugelumlaufeinheit nach Anspruch 11,
dadurch gekennzeichnet,
daß die Führungsteile (24, 24a) mit einem Zentrierrand (48) auf einem Zentrierabsatz (47) des Büchsensegments (9) gehalten sind.

13. Kugelumlaufeinheit nach Anspruch 1,
dadurch gekennzeichnet,
daß die Führungsteile (24, 24a) und die Kopfstücke (34, 34a) aus Kunststoff bestehen.

14. Kugelumlaufeinheit nach Anspruch 6,
dadurch gekennzeichnet,
daß die Stabilisierstäbe (29) aus Stahl bestehen.

15. Kugelumlaufeinheit nach Anspruch 1,
dadurch gekennzeichnet,
daß der Büchsenkörper (9) mit einem Montageflansch (44) versehen ist.

## Claims

1. A ball circulation unit (1, 1a, 1b) having a bush member (9) comprising a longitudinal slot (6); and a cage (11) for extending over the guiding rail (2) whose cross-section is at least partially circular; and having a plurality of continuous ball rows (7) which are distributed across the cross-section and which are guided in the cage (11) and in the bush member (9), with the ball rows (7) each comprising a carrying portion (13) which extends parallel to the longitudinal axis (8) of the bush member (9) and the guiding rail (2) and in which the balls (12) project from the cage (11) for the purpose of contacting the guiding rail (2); a returning portion (14) and deflecting portions (15) connecting said two portions at their ends, with the balls (12) in the carrying portion (13) being supported on running tracks of the bush member (12), with the returning portions (14) being arranged on a greater diameter than the carrying portions (13) and with the cage (11) having a multi-component design and comprising two identical guiding parts (24, 24a) which are inserted into the bush member (9) from its two ends, which laterally guide the balls (12) in the carrying portion (13) and which comprise radially inwardly and outwardly opening longitudinal slots (25) and each comprise a flange (30) comprising a first portion of the deflecting portions (15) for transferring the balls (12) into the returning portion (14), and which comprise means (28, 29) for centring the two guiding parts (24, 24a) relative to one another and means (31, 32; 47, 48) for centring them relative to the bush member (9),
characterised in
that the bush member (9) is designed as a solid member whose inner face (16) serves as a running track for the balls (12) located in the carrying portions (13),
that the carrying portions (13) and the returning portions (14) are arranged in radially extending planes (R1, R2) which are circumferentially offset relative to one another and that the returning portions (14) are formed by bores (21) in the bush member (9),
that the ball rows (7) are arranged in such a way that the returning portions (14) of the ball rows adjoining the longitudinal slot (6) on both sides directly adjoin the slot limiting faces (22, 23),
that the cage (11) consists of the two guiding parts (24, 24a) and head pieces (3) attached to the top ends thereof and comprising the second portion (38) of the deflecting portions (15) and that there are provided means (33, 35) for centring the head pieces (34, 34a) relative to the guiding parts (24, 24a).

2. A ball circulation unit according to claim 1,
characterised in
that the ball rows (7) are designed to be symmetrical relative to a plane (E) containing the longitudinal axis (8) of the bush member (9) and the central plane of the longitudinal slot (6).

3. A ball circulation unit according to claim 1,
characterised in
that, if viewed in the longitudinal section, the bush member (9), at the side of the inner face (16) forming the running track, is provided with bored steps (17) whose diameter is greater than that of the bore constituting the inner face (16) where the guiding parts (24, 24a) and the head pieces (34, 34a) are inserted and secured.

4. A ball circulation unit according to claim 2,
characterised in
that the guiding parts (24, 24a) each comprise a centring cam (31) which axially projects from their flanges (30) in the direction of the annular face (18) of the bored step (17) and which engages a corresponding centring recess (32) starting from the annular faces(18).

5. A ball circulation unit according to claim 1,
characterised in
that the guiding parts (24, 24a) are provided with an annular centring bead (33) and that the head pieces (34, 34a) are provided with a corresponding annular centring groove (35).

6. A ball circulation unit according to claim 1,
characterised in
that the guiding parts (24, 24a) and the head pieces (34, 34a) are provided with circumferentially distributed bores (28, 36) which extend parallel to the longitudinal axis (8) and into which stabilising bars (29) may be inserted.

7. A ball circulation unit according to claim 6,
characterised in
that the bores (28) are arranged in the webs (27) between two carrying portions of the guiding parts (24, 24a).

8. A ball circulation unit according to claims 2 and 4,
characterised in
that the centring recess (32) is arranged on the plane (E) of symmetry.

9. A ball circulation unit according to claim 3,
characterised in
that holding rings (40, 40a) abutting the end faces of the head pieces (34, 34a) are inserted into the bored steps (17) and are radially inwardly secured by beading the wall (20) of the bush (9).

10. A ball circulation unit according to claim 9,
characterised in
that the holding rings (40, 40a) are provided with recesses (41) for receiving a sealing ring.

11. A ball circulation unit according to claim 1,
characterised
by being divided into a plurality of complementary circular segments (1a, 1b).

12. A ball circulation unit according to claim 11,
characterised in
that the guiding parts (24, 24a) are held via a centring edge (48) on a centring step (47) of the bush segment (9).

13. A ball circulation unit according to claim 1,
characterised in
that the guiding parts (24, 24a) and the head pieces (34, 34a) are made of plastics.

14. A ball circulation unit according to claim 6,
characterised in
that the stabilising bars (29) are made of steel.

15. A ball circulation unit according to claim 1,
characterised in
that the bush member (9) is provided with a mounting flange (44).

## Revendications

1. Unité à recyclage de billes (1, 1a, 1b) comportant : un corps (9) de manchon présentant une fente longitudinale (6) et muni d'une cage (11) pour chevaucher un rail de guidage (2) dont la section droite est, au moins en partie, circulaire; et plusieurs rangées sans fin de billes (7), ces rangées étant disposées en étant réparties sur la section droite, et les billes étant guidées dans la cage (11) et dans le corps de manchon (9), les rangées de billes (7) présentant chacune une partie porteuse (13) qui s'étend parallèlement à l'axe longitudinal (8) du corps de manchon (9) et du rail de guidage (2), partie porteuse dans laquelle les billes (12) débordent hors de la cage (11) afin de s'appliquer sur le rail de guidage (2), et comportent chacune une partie retour (14) et, en leurs extrémités, des parties de renvoi (15) reliant ces deux parties, les billes (12) dans la partie porteuse (13) prenant appui contre des pistes de roulement du corps de manchon (9), les parties retour (14) étant disposées sur un plus grand diamètre que les parties porteuses (13), et la cage (11) étant réalisée en plusieurs parties et présentant deux parties guides (24, 24a) introduites dans le corps de manchon (9) par les deux extrémités de celui-ci, ces parties guides guidant latéralement les billes (12) dans la partie porteuse (13) et présentant des fentes longitudinales (25) ouvertes radialement vers l'intérieur et vers l'extérieur, lesdites parties guides présentant chacune un collet (30) avec une première portion des parties de renvoi (15) pour le recyclage des billes (12) dans les parties retour (14), et la cage présentant des moyens (28, 29) pour le centrage des deux parties guides (24, 24a) l'une par rapport à l'autre, et des moyens (31, 32; 47, 49) pour le centrage par rapport au corps de manchon (9);
caractérisée
par le fait que le corps de manchon (9) est réalisé sous la forme d'un corps massif dont la surface intérieure (16) sert de piste de roulement pour les billes (12) se trouvant dans les parties porteuses (13);
par le fait que les parties porteuses (13) et les parties retour (14) sont disposées dans des plans (R1, R2) s'étendant radialement mais mutuellement décalés circonférentiellement, et les parties retour (14) sont constituées par des trous (21) dans le corps de manchon (9);
par le fait que les rangées de billes (7) sont réparties de manière que les parties retour (14) des rangées de billes bordant des deux côtés la fente longitudinale (6) soient immédiatement voisines des surfaces (22, 23) délimitant la fente;
par le fait que la cage (11) est constituée par les deux parties guides (24, 24a) et par des pièces de tête (3) qui y sont agencées côté tête et qui présentent la deuxième partie (38) des parties de renvoi (15), et par le fait qu'il est prévu des moyens (33, 35) pour centrer les pièces de tête (34, 34a) par rapport aux parties guides (24, 24a).

2. Unité à recyclage de billes selon revendication 1,
caractérisée
par le fait que les rangées de billes (7) sont symétriques par rapport à un plan (E) contenant l'axe longitudinal (8) du corps de manchon (9) et le plan médian de la fente longitudinale (6).

3. Unité à recyclage de billes selon revendication 1,
caractérisée
par le fait que le corps de manchon (9), vu en coupe longitudinale, est muni, latéralement à la surface intérieure (16) formant la piste de roulement, de gradins ou épaulements de trou (17) ayant un plus grand diamètre que le trou constituant la surface intérieure (16), les parties guides (24, 24a) et les pièces de tête (34, 34a) étant insérées et arrêtées à chaque fois dans ces gradins.

4. Unité à recyclage de billes selon revendication 2,
caractérisée
par le fait que les parties guides (24, 24a) présentent chacune un mentonnet de centrage (31) faisant saillie axialement, depuis leur collet (30), en direction de la surface annulaire (18) du gradin (17) du trou, ces mentonnets s'engageant dans des évidements de centrage correspondants (32) qui partent des surfaces annulaires (18).

5. Unité à recyclage de billes selon revendication 1,
caractérisée
par le fait que les parties guides (24, 24a) sont munies d'un bourrelet de centrage annulaire (33) et les pièces de tête (34, 34a) sont munies d'une rainure de centrage annulaire correspondante (35).

6. Unité à recyclage de billes selon revendication 1,
caractérisée
par le fait que les parties guides (24, 24a) et les pièces de tête (34, 34a) sont munies de trous (28, 36) répartis circonférentiellement, s'étendant parallèlement à l'axe longitudinal (8) et aptes à recevoir les tiges stabilisatrices (29).

7. Unité à recyclage de billes selon revendication 6,
caractérisée
par le fait que les trous (28) sont aménagés dans les parties intermédiaires (27) comprises entre deux parties porteuses des parties guides (24, 24a).

8. Unité à recyclage de billes selon les revendications 2 et 4,
caractérisée
par le fait que l'évidement de centrage (32) est situé sur le plan de symétrie (E).

9. Unité à recyclage de billes selon revendication 3,
caractérisée
par le fait que des anneaux d'arrêt (40, 40a) s'appliquant frontalement contre les pièces de tête (34, 34a) sont introduits dans les gradins (17) du trou et sont immobilisés par rabattement de la paroi (20) du manchon (9) radialement vers l'intérieur.

10. Unité à recyclage de billes selon revendication 9,
caractérisée
par le fait que les anneaux d'arrêt (40, 40a) sont munis d'évidements (41) pour recevoir un anneau d'étanchéité.

11. Unité à recyclage de billes selon revendication 1,
caractérisée
par le partage en plusieurs segments d'anneau circulaire se complétant (1a, 1b).

12. Unité à recyclage de billes selon revendication 11,
caractérisée
par le fait que les parties guides (24, 24a) sont maintenues, par un bord de centrage (48), sur un talon de centrage (47) du segment de manchon (9).

13. Unité à recyclage de billes selon revendication 1,
caractérisée
par le fait que les parties guides (24, 24a) et les pièces de tête (34, 34a) sont en matière plastique.

14. Unité à recyclage de billes selon revendication 6,
caractérisée
par le fait que les tiges stabilisatrices (29) sont en acier.

15. Unité à recyclage de billes selon revendication 1,
caractérisée
par le fait que le corps de manchon (9) est muni d'un collet ou bride de montage (44).
